# EUROPEAN PATENT SPECIFICATION

(11) **EP 3 315 472 B1**
(45) Date of publication and mention of the grant of the patent: **04.03.2020**
(21) Application number: 16814048.1
(22) Date of filing: 28.04.2016
(51) Int. Cl.: C04B 22/08, C04B 22/10, C04B 22/14, C04B 24/06, C04B 24/08, C04B 28/02, C04B 28/04, C04B 40/00

(54) **QUICK HARDENING MATERIAL, METHOD FOR PRODUCING IT, AND QUICK HARDENING CEMENT COMPOSITION USING IT**
SCHNELLHÄRTENDES MATERIAL, VERFAHREN ZUR HERSTELLUNG DAVON UND SCHNELLHÄRTENDE ZEMENTZUSAMMENSETZUNG DAMIT
MATÉRIAU À DURCISSEMENT RAPIDE, PROCÉDÉ POUR LE FABRIQUER, ET COMPOSITION DE CIMENT À DURCISSEMENT RAPIDE L'UTILISANT

(30) Priority: 26.06.2015 JP 2015128630
(43) Date of publication of application: 02.05.2018
(73) Proprietor: Denka Company Limited, Tokyo 103-8338 (JP)
(72) Inventor: USHIRO, Masataka, Itoigawa-shi Niigata 949-0393 (JP); HIGUCHI, Takayuki, Itoigawa-shi Niigata 949-0393 (JP); MORIOKA, Minoru, Itoigawa-shi Niigata 949-0393 (JP)
(74) Representative: Blodig, Wolfgang
(86) International application number: PCT/JP2016/063472
(87) International publication number: WO 2016/208277

(56) References cited:
- JP-A- H0 297 443
- JP-A- H07 157 347
- JP-A- 2002 053 356
- JP-A- 2005 162 568
- JP-A- 2006 335 620
- JP-A- 2008 195 574
- JP-A- 2008 195 574
- JP-A- 2012 097 497

## Description

### TECHNICAL FIELD

The present invention relates to a quick hardening material to speed up hardening of a hydraulic material such as cement concrete, a method of producing it, and a quick hardening cement composition using it.

### BACKGROUND ART

As a quick hardening material to impart quick hardening property to cement concrete, e.g. a material comprising a calcium aluminate compound and gypsum has been known (Patent Documents 1 and 2).

A quick hardening material is to harden cement concrete in several minutes to several tens minutes after casting into a frame and to develop practical strength with which the concrete can be removed from the frame several hours later, and is widely used for mortar for emergency construction or emergency repair such as paving concrete for expressway for the purpose of opening road traffic in a short time, grout mortar, etc.

On the other hand, a cement composition containing a fatty acid has for the purpose of improving the weathering resistance of calcium aluminate or of preventing patterns such as white spots by formation of ettringite, has been proposed. However, addition of a fatty acid impairs development of early strength (Patent Documents 3 and 4).

### PRIOR ART DOCUMENTS

### PATENT DOCUMENTS

Patent Document 1: JP-B-S49-30683
Patent Document 2: JP-A-H03-12350
Patent Document 3: JP-A-H02-97443
Patent Document 4: JP-A-2008-195574
JP 2006/335620 A discloses a cement admixture and a super rapid-hardening cement.

### DISCLOSURE OF INVENTION

### TECHNICAL PROBLEM

The object of the present invention is to provide a quick hardening material excellent in development of early strength without impairing development of long-term strength and the appearance of cement concrete, a method for producing it, and a quick hardening cement composition using it.

### SOLUTION TO PROBLEM

The present inventors have conducted extensive studies to achieve the above object and as a result, accomplished the present invention having the following aspects.
(1) A cement quick hardening material which comprises a calcium aluminate clinker ground product obtained by grinding 100 parts by mass of a calcium aluminate clinker in the presence of from 0.2 to 3.0 parts by mass of a fatty acid represented by the formula (RCOO)ₙX (wherein R is a saturated or unsaturated hydrocarbon, n is 1 or 2, and X is hydrogen, an alkali metal or an alkaline earth metal), gypsum, a retarder and an alkali metal carbonate.
(2) The cement quick hardening material according to (1), wherein the fatty acid is palmitic acid or stearic acid.
(3) The cement quick hardening material according to (1) or (2), wherein the retarder is at least one member selected from the group consisting of citric acid, gluconic acid, tartaric acid, malic acid and salts thereof.
(4) The cement quick hardening material according to any one of (1) to (3), wherein the alkali metal carbonate is lithium carbonate, sodium carbonate, potassium carbonate, sodium bicarbonate or potassium bicarbonate.
(5) The cement quick hardening material according to any one of (1) to (4), which contains gypsum in an amount of from 20 to 150 parts per 100 parts of the calcium aluminate clinker ground product, and contains the retarder in an amount of from 0.1 to 25 parts and the alkali metal carbonate in an amount of from 2 to 55 parts per 100 parts of a mixture of the calcium aluminate clinker ground product and the gypsum.
(6) The cement quick hardening material according to any one of (1) to (5), wherein the calcium aluminate clinker ground product has a Blaine specific surface area of from 3,500 to 8,500 cm²/g.
(7) A method for producing the quick hardening material as defined in any one of (1) to (6), which comprises adding the fatty acid to the calcium aluminate clinker, followed by mixing and grinding, and adding the gypsum, the retarder and the alkali metal carbonate sequentially or all at once to the obtained calcium aluminate clinker ground product.
(8) A method for producing the quick hardening material as defined in any one of (1) to (6), which comprises adding the fatty acid to a ground product of the calcium aluminate clinker, followed by mixing and grinding, and adding the gypsum, the retarder and the alkali metal carbonate sequentially or all at once to the obtained calcium aluminate clinker ground product.
(9) A method for producing the quick hardening material as defined in any one of (1) to (6), which comprises adding the fatty acid and the gypsum to the calcium aluminate clinker, followed by grinding, and adding the retarder and the alkali metal carbonate sequentially or all at once to the obtained calcium aluminate clinker ground product.
(10) A quick hardening cement composition which comprises cement and the quick hardening material as defined in any one of (1) to (6).
(11) The quick hardening cement composition according to (10), wherein the content of the quick hardening material is from 5 to 35 parts per 100 parts of the total amount of the cement and the quick hardening material.
(12) A method for improving early strength of cement concrete, which uses the quick hardening cement composition as defined in (10) or (11).

### ADVANTAGEOUS EFFECTS OF INVENTION

According to the quick hardening material (agent) and the quick hardening cement composition using it of the present invention, it is possible to provide a cement composition excellent in development of early strength without impairing development of long-term strength and the appearance, and according to the cement composition, it is possible to harden cement concrete within several tens minutes after casting into a frame and to develop practical strength with which the concrete can be removed from the frame several hours later.

### DESCRIPTION OF EMBODIMENTS

Now, the present invention will be described in detail.

In the present invention, "part(s)" and "percentage (%)" are based on mass unless otherwise specified.

Further, cement concrete in the present invention generally means mortar and concrete.

The calcium aluminate clinker used in the present invention generally means a substance having hydration activity containing CaO and Al₂O₃ as the main components, obtained by mixing a calcia raw material, an alumina raw material and the like and subjecting the mixture to a heat treatment such as baking in a kiln or melting in an electric furnace.

The calcium aluminate clinker may, for example, be C3A, C₁₂A₇, C₁₁A_{7·}CaF₂, C₁₁A₇·CaCl₂, C₂A·SiO₂, CA or C₂A, where CaO is abbreviated as C and Al₂O₃ as A. Further, a compound having part of CaO or Al₂O₃ replaced with e.g. an alkali metal oxide, an alkaline earth metal oxide, silicone oxide, titanium oxide, iron oxide, an alkali metal halide, an alkaline earth metal halide, an alkali metal sulfate or an alkaline earth metal sulfate, and a compound containing CaO and Al₂O₃ as the main components and having the above compound solid-solubilized in a small amount, may also be used as the calcium aluminate clinker.

As the form of the calcium aluminate clinker, either crystalline compound or amorphous compound may be used. In view of the reaction activity, an amorphous calcium aluminate clinker is preferred, and an amorphous calcium aluminate clinker obtained by quenching a heat-treated product corresponding to the C₁₂A₇ composition is more preferred.

The fatty acid used in the present invention is a fatty acid represented by the formula (RCOO)ₙX or a salt thereof.

In the above formula, R is a saturated or unsaturated hydrocarbon, and the number of carbon atoms in the hydrocarbon is preferably from 10 to 20, more preferably from 14 to 16. The number of the unsaturated bond is not particularly limited within a range not to impair the effects of the present invention.

n is 1 or 2, and X is an alkali metal such as lithium, sodium or potassium, or an alkaline earth metal such as calcium or magnesium.

The saturated fatty acid used in the present invention may, for example, be preferably palmitic acid, stearic acid, lauric acid, myristic acid or arachidic acid, or an alkali metal salt or alkaline earth metal salt thereof, such as a sodium salt, a potassium salt or a calcium salt.

The unsaturated fatty acid used in the present invention may, for example, be preferably oleic acid, vaccenic acid or linolic acid, or an alkali metal salt or alkaline earth metal salt thereof, such as a sodium salt, a potassium salt or a calcium salt.

The fatty acid used in the present invention is produced from e.g. beef tallow, olive oil, rice bran oil, or animal or vegetable oil as the raw material, via steps such as purification, curing, splitting, distillation or fractional distillation. The splitting is commonly classified into high-pressure process and Twitchell process depending upon e.g. operation conditions of a distillation column. The fatty acid in the present invention may be produced by either splitting process, and other industrial products may also be used.

In a case where the calcium aluminate clinker is ground, the amount of use (the amount of presence) of the fatty acid is preferably from 0.2 to 3.0 parts, more preferably from 0.5 to 1.5 parts per 100 parts of the calcium aluminate clinker. If the amount of use of the fatty acid is small, no effect to improve development of the strength may be obtained, and if the amount of use of the fatty acid is large, agglomerates may form at the time of grinding and mixing, or aggregation property or development of the strength may be impaired when the ground product is used for cement admixture.

In the present invention, the calcium aluminate clinker may be ground all at once to achieve the desired degree of grinding, or may be ground dividedly, or may be ground after addition of the gypsum, the retarder and/or the alkali metal carbonate which are other components contained in the quick hardening material, to the calcium aluminate clinker. In any case, in the present invention, the fatty acid should be present at any one of or all the stages at which the calcium aluminate clinker is ground.

The method and the apparatus used for mixing and grinding the calcium aluminate clinker and the fatty acid are not particularly limited. Specific examples include a method of adding the fatty acid to the calcium aluminate clinker at the time of grinding the calcium aluminate clinker, followed by mixing and grinding by a grinding machine such as a ball mill, a rod mill or a roller mill, and a method of adding the fatty acid to the calcium aluminate clinker ground product, followed by mixing and grinding by a grinding machine such as a ball mill, a rod mill or a roller mill. It is possible to mix the calcium aluminate clinker or its ground product and the gypsum, to add the fatty acid to the mixture and then to conduct mixing and grinding, however, from economical viewpoint, it is preferred to add the fatty acid at the time of grinding the calcium aluminate clinker.

Whether the fatty acid in the present invention is added in a predetermined ratio and is uniformly mixed and ground can be measured by analyzing the calcium aluminate clinker surface by a surface analyzer such as EPMA (for example, EPMA-1720 manufactured by Shimadzu Corporation), SEM (for example, VE-9800 manufactured by KEYENCE CORPORATION), ESCA (for example, ESCA-3400HSE manufactured by Shimadzu Corporation), FT-IR (for example, IRTracer-100 manufactured by Shimadzu Corporation), or GC-MAS (for example, GCMS-TQ8040 manufactured by Shimadzu Corporation).

Further, quantitative determination is possible by extraction with an organic solvent such as an alcohol, an ether, chloroform, benzene, petroleum ether or a fatty acid, followed by separation and purification and by organic matter analysis e.g. by gas chromatography.

The degree of fineness of the calcium aluminate clinker ground product is, in terms of the Blaine specific surface area (hereinafter referred to as Blaine value), preferably from 3,500 to 8,500 cm²/g, more preferably from 4,500 to 6,500 cm²/g. If the Blaine value is less than 3,500 cm²/g, the quick hardening property and development of early strength of cement concrete may decrease. Further, even if the Blaine value exceeds 8,500 cm²/g, no further improvement in the effect can be expected, and the workability may rather deteriorate. Further, grinding will take long, and such is economically inefficient.

The gypsum used in the present invention may be anhydrous gypsum, hemihydrate gypsum or dihydrate gypsum. Among them, in view of the aggregation property and development of strength, anhydrous gypsum is preferred.

The grain size of the gypsum is usually at a level used for e.g. cement, and in view of development of early strength of cement concrete, the Blaine value is preferably at least 3,000 cm²/g, more preferably at least 4,500 cm²/g. If the grain value of the gypsum is small, the aggregation property and development of strength of cement concrete may decrease. The Blaine value is preferably larger, but is usually preferably at most 9,000 cm²/g in view of the production cost, etc.

The amount of use of the gypsum is not particularly limited and is preferably from 20 to 150 parts, more preferably from 50 to 120 parts per 100 parts of the calcium aluminate clinker ground product. If the amount of use of the gypsum is small, the aggregation property of cement concrete may decrease and development of long-term strength may not be accelerated, and if the amount of use of the gypsum is large, initial aggregation may be retarded, and development of early strength may decrease.

The retarder used in the present invention may, for example, be citric acid, gluconic acid, tartaric acid, malic acid or a salt thereof (hereinafter sometimes referred to as oxycarboxylic acid), and they may be used alone or in combination of two or more. Among them, in view of adjustment of the hardening time and development of early strength, it is preferred to use one or more selected from citric acid, gluconic acid and salts thereof.

The alkali metal carbonate (hereinafter referred to as alkali carbonate) used in the present invention may, for example, be an alkali metal salt of a carbonate such as lithium carbonate, sodium carbonate or potassium carbonate or an alkali metal salt of a bicarbonate such as sodium bicarbonate or potassium bicarbonate. Among them, in view of favorable development of strength after hardening, preferred is an alkali metal salt of a carbonate, more preferred is potassium carbonate.

As the blend ratio of the retarder (oxycarboxylic acid) and the alkali carbonate, the amount of the oxycarboxylic acid is preferably from 5 to 50 parts, more preferably from 10 to 40 parts per 100 parts of the alkali carbonate. If the ratio of the oxycarboxylic acid is low, the hardening time may not be adjusted, and if the ratio of the oxycarboxylic acid is high, development of early strength may decrease.

The amounts of use of the retarder and the alkali carbonate vary depending upon the operating time (useful life) and can hardly unambiguously be determined. In the present invention, the addition amounts are adjusted so that cement concrete will be hardened to fit with an operating time (useful life) of from 15 to 40 minutes. Usually, the amount is preferably from 0.1 to 4 parts, more preferably from 0.2 to 3 parts, most preferably from 0.3 to 2 parts per 100 parts of a binder comprising cement, the calcium aluminate clinker ground product and the gypsum. No sufficient operating time (useful life) may be secured, or hardening may be retarded out of such a range.

The amounts of use of the retarder and the alkali carbonate contained in the quick hardening material in the present invention vary depending upon the application, and the amount of the retarder is preferably from 0.1 to 25 parts, more preferably from 0.3 to 12 parts based on the mixture of the calcium aluminate clinker and the gypsum. The amount of the alkali carbonate is preferably from 2 to 55 parts, more preferably from 6 to 30 parts.

The amount of use of the quick hardening material in the present invention varies depending upon the application, and is preferably from 5 to 35 parts, more preferably from 10 to 30 parts, most preferably from 15 to 25 parts per 100 parts of the total amount of the cement and the quick hardening material. If it is less than 5 parts, development of early strength may be little, and if it exceeds 35 parts, the long-term strength may decrease.

The cement used in the present invention may, for example, be various Portland cements such as normal, high early strength, ultra-high-early strength, low-heat and moderate-heat Portland cements, blended cements having such Portland cement mixed with blast furnace slag, fly ash or silica, filler cements having a limestone powder, an air-cooled blast furnace slag powder mixed, and environmentally friendly cements (eco-cements) produced by using refuse incineration ash or sewage sludge incineration ash as the raw material. They may be used alone or in combination of two or more.

In the present invention, it is possible to use, in addition to the cement, the cement admixture, fine aggregate such as sand and coarse aggregate such as grave, one or more selected from the group consisting of admixture materials such as an expansive additive, a water-reducing admixture, an air-entraining and water-reducing admixture, a high-range water-reducing admixture, an air entraining and high-range water-reducing admixture, a defoaming agent, a thickener, a conventional anti-corrosive agent, an antifreezing agent, a shrinkage-reducing agent, an aggregation-adjusting agent, a clay mineral such as bentonite, an anion exchanger such as hydrotalcite, slag such as blast furnace water-granulated slug powder and an air-cooled blast furnace slug powder, and a limestone powder, within a range not to substantially impair the object of the present invention.

### EXAMPLES

Now, the present invention will be described in further detail with reference to Examples of the present invention and Comparative Examples. However, it should be understood that the present invention is by no means restricted thereto.

### <Materials used>

Cement: normal Portland cement, Blaine value: 3,200 cm²/g, specific gravity: 3.15
Fine aggregate: JIS standard sand, commercial product (manufactured by JAPAN CEMENT ASSOCIATION, Standard sand for the strength test of cement)
Calcium aluminate clinker: an amorphous clinker prepared by mixing reagent calcium carbonate and alumina in a proportion corresponding to the C₁₂A₇ composition, melting the mixture at 1,650°C and then quenching it.
Anhydrous gypsum: commercial product (manufactured by NORITAKE CO., LIMITED), anhydrous gypsum ground product, Blaine value: 6,000 cm²/g.
Retarder: citric acid (reagent)
Alkali carbonate: potassium carbonate (reagent)
Fatty acid: Palmitic acid (reagent), stearic acid (reagent), lauric acid (reagent), sodium laurate (reagent), myristic acid (reagent), oleic acid (reagent), calcium stearate (reagent), zinc stearate (reagent), magnesium stearate, sodium stearate (reagent), potassium stearate (reagent).

### Experiment Example 1

The calcium aluminate clinker was adjusted to a grain size of at most 5 mm, a fatty acid as identified in Table 1 was added, and they were mixed and ground by a roll mill (manufactured by EARTHTECHNICA CO., LTD., model: ENB19) to a Blaine value of 6,000 cm²/g to obtain a calcium aluminate clinker ground product. To 100 parts of the obtained calcium aluminate clinker ground product, 100 parts of anhydrous gypsum, citric acid and potassium carbonate in amounts as identified in Table 1 were blended and mixed by ploughshare mixer (WB type, manufactured by Pacific Machinery & Engineering Co., Ltd.) to obtain a quick hardening material (agent).

The quick hardening material and cement were blended to prepare a quick hardening cement composition with a content of the quick hardening material of 10 parts per 100 parts of the composition, and to the quick hardening cement composition, 150 parts of the fine aggregate and 35 parts of water were blended to prepare mortar in a room at 20°C, and the useful life and the compressive strength were measured.

Further, as Comparative Examples, a calcium aluminate clinker ground to a Blaine value of 6,000 cm²/g using a ball mill without adding a fatty acid, was used, and at the time of kneading to prepare mortar, the fatty acid was added together with the anhydrous gypsum, citric acid and potassium carbonate (separate addition, experiment Nos. 1-12, 1-14, 1-18, 1-19 and 1-20), and the fatty acid was mixed together with the ground calcium aluminate clinker, the anhydrous gypsum, citric acid and potassium carbonate, by OM mixer (Tajima-KK. product name: B180) (mixing: experiment No. 1-21), and measurement was conducted in the same manner. In the above separate addition and mixing systems, grinding of the calcium aluminate clinker in the presence of the fatty acid was not conducted.

### <Measurement method>

Multicolor pattern: presence or absence of white spots (spots) on the surface of hardened cement concrete (material age: 7 days) was visually confirmed. A case where white spots were observed, which could be confirmed in a case where no fatty acid was added, was rated as x, a case where only a few spots were observed or the spots were hardly visible was rated as Δ, and a case where no spot was observed was rated as o.

Useful life: the initial setting time of quick hardening mortar prepared was measured in accordance with JIS A1147, "Method of test for time of setting of concrete mixtures by penetration resistance". The initial setting time was taken as the useful life since filling operation is possible until just before the initial setting time.

Compressive strength: a test specimen of 4×4×16 cm was prepared in accordance with JIS R5201, and the compressive strength was measured 3 hours and 7 days later.

**[Table 1]**

| Experiment No. | Fatty acid addition method | Fatty acid | Fatty acid (part) | Citric acid (part) | Potassium carbonate (part) | Multicolor pattern | Useful life (min) | Compressive strength (N/mm²) | | Remark |
|---|---|---|---|---|---|---|---|---|---|---|
| | | | | | | | | 3 hours | 7 days | |
| 1-1 | - | - | 0 | 0.3 | 0.7 | × | 31 | 8 | 70.8 | Comp. Ex. |
| 1-2 | Mixing and grinding | Lauric acid | 0.5 | 0.3 | 0.7 | ○ | 27 | 10.1 | 51.1 | Ex.* |
| 1-3 | Mixing and grinding | Sodium laurate | 0.5 | 0.3 | 0.7 | ○ | 24 | 9.7 | 50 | Ex.* |
| 1-4 | Mixing and grinding | Myristic acid | 0.5 | 0.3 | 0.7 | ○ | 32 | 10 | 56.4 | Ex.* |
| 1-5 | Mixing and grinding | Oleic acid | 0.5 | 0.3 | 0.7 | ○ | 29 | 9.8 | 54.8 | Ex.* |
| 1-6 | Mixing and grinding | Stearic acid | 0.5 | 0.3 | 0.7 | ○ | 25 | 10.4 | 68.9 | Ex.* |
| 1-7 | Mixing and grinding | Calcium stearate | 0.5 | 0.3 | 0.7 | ○ | 26 | 9.9 | 71.1 | Ex.* |
| 1-8 | Mixing and grinding | Zinc stearate | 0.5 | 0.3 | 0.7 | ○ | 27 | 10.2 | 67.6 | Ex.* |
| 1-9 | Mixing and grinding | Magnesium stearate | 0.5 | 0.3 | 0.7 | ○ | 26 | 9.8 | 69.3 | Ex.* |
| 1-10 | Mixing and grinding | Sodium stearate | 0.5 | 0.3 | 0.7 | ○ | 21 | 10.4 | 70.1 | Ex.* |
| 1-11 | Mixing and grinding | Potassium stearate | 0.5 | 0.3 | 0.7 | ○ | 22 | 10 | 68.8 | Ex.* |
| 1-12 | Separate addition | Stearic acid | 0.5 | 0.3 | 0.7 | Δ | 29 | 7.9 | 70.2 | Comp. Ex. |
| 1-13 | Mixing and grinding | Palmitic acid | 0.5 | 0.3 | 0.7 | ○ | 26 | 10.6 | 68.1 | Ex.* |
| 1-14 | Separate addition | Palmitic acid | 0.5 | 0.3 | 0.7 | Δ | 30 | 8.1 | 67.4 | Comp. Ex. |
| 1-15 | Mixing and grinding | Stearic acid | 0.5 | 0 | 0 | - | Kneading impossible | - | - | Comp. Ex. |
| 1-16 | Mixing and grin ding | Stearic acid | 0.5 | 0.3 | 0 | ○ | 20 | 6.1 | 69 | Comp. Ex. |
| 1-17 | Mixing and grinding | Stearic acid | 0.5 | 0 | 0.7 | - | Kneading impossible | - | - | Comp. Ex. |
| 1-18 | Separate addition | Stearic acid | 0.5 | 0 | 0 | - | Kneading impossible | - | - | Comp. Ex. |
| 1-19 | Separate addition | Stearic acid | 0.5 | 0.3 | 0 | Δ | 19 | 5.6 | 68.8 | Comp. Ex. |
| 1-20 | Separate addition | Stearic acid | 0.5 | 0 | 0.7 | - | Kneading impossible | - | - | Comp. Ex. |
| 1-21 | Mixing | Stearic acid | 0.5 | 0.3 | 0.7 | Δ | 28 | 7.7 | 69.9 | Comp. Ex. |
| 1-22 | Mixing and grin ding | Stearic acid | 0.1 | 0.3 | 0.7 | Δ | 29 | 8.3 | 67.9 | Comp. Ex. |
| 1-23 | Mixing and grinding | Stearic acid | 0.2 | 0.3 | 0.7 | ○ | 22 | 9.8 | 68.3 | Ex.* |
| 1-24 | Mixing and grin ding | Stearic acid | 1 | 0.3 | 0.7 | ○ | 28 | 10.6 | 69.4 | Ex.* |
| 1-25 | Mixing and grin ding | Stearic acid | 2 | 0.3 | 0.7 | ○ | 35 | 10.8 | 68.5 | Ex.* |
| 1-26 | Mixing and grin ding | Stearic acid | 3 | 0.3 | 0.7 | ○ | 55 | 8.8 | 69.2 | Ex.* |

| | | | | | | | | | | |
|---|---|---|---|---|---|---|---|---|---|---|
| Ex.*: Example of the present invention | | | | | | | | | | |

As shown in Table 1, it is found that by using the quick hardening material of the present invention, no white spot (spot) was formed on the surface of the hardened cement concrete, and development of early strength improved. Further, from the results in experiment Nos. 1-15 to 1-21, it is found that the effect of improving development of early strength was significant by addition of the fatty acid by mixing and grinding, as compared with separate addition or mixing.

In Table 1, kneading impossible means that hardening of mortar was so quick that the test specimen could not be prepared.

Whereas from the results in experiment Nos. 1-22 to 1-26, development of strength did not improve in a case where the amount of addition of the fatty acid at the time of mixing and grinding was small, and the useful life was retarded in a case where the amount of addition of the fatty acid was large.

### Experiment Example 2

To 100 parts of the calcium aluminate clinker, 0.5 part of stearic acid as the fatty acid was added, and they were mixed and ground to a Blaine value as identified in Table 2 by a ball mill to produce a calcium aluminate clinker ground product. The same operation as in Experiment Example 1 was conducted except that to 100 parts of the obtained calcium aluminate clinker ground product, 100 parts of the anhydrous gypsum, 0.3 part of citric acid and 0.7 part of potassium carbonate were added to obtain a quick hardening material.

**[Table 2]**

| Experiment No. | Fatty acid addition method | Blaine value (cm²/g) | Multicolor pattern | Useful life (min) | Compressive strength (N/mm²) | | Remark |
|---|---|---|---|---|---|---|---|
| | | | | | 3 hours | 7 days | |
| 2-1 | Mixing and grinding | 3,000 | ○ | 41 | 7.6 | 68.1 | Example of the present invention |
| 2-2 | Mixing and grinding | 4,000 | ○ | 36 | 10.6 | 66.2 | Example of the present invention |
| 1-6 | Mixing and grinding | 6,000 | ○ | 25 | 10.4 | 68.9 | Example of the present invention |
| 2-3 | Mixing and grinding | 8,000 | ○ | 16 | 10.7 | 69.4 | Example of the present invention |
| 2-4 | Mixing and grinding | 9,000 | ○ | 11 | 9.5 | 70.3 | Example of the present invention |

As shown in Table 2, the useful life tends to be short and initial and long-term compressive strength tends to improve when the Blaine value increases. However, it is found that no further effect to improve early strength was obtained in Experiment Example 2-4 in which the Blaine value is 9,000 cm²/g.

### Experiment Example 3

In experiment No. 3-1, to 100 parts of a calcium aluminate clinker ground to a Blaine value of 5,000 cm²/g by a ball mill, 0.5 part of stearic acid as the fatty acid was added and mixed, and the mixture was ground to a Blaine value of 6,000 cm²/g by a ball mill to obtain a calcium aluminate clinker ground product. The same operation as in Experiment Example 1 was conducted except that to 100 parts of the calcium aluminate clinker ground product, 100 parts of anhydrous gypsum, 0.3 part of citric acid and 0.7 part of potassium carbonate were added to obtain a quick hardening material.

In experiment No. 3-2, to 100 parts of the calcium aluminate clinker, 100 parts of anhydrous gypsum and 0.5 part of stearic acid as the fatty acid were added and mixed, and the mixture was ground to a Blaine value of 6,000 cm²/g by a ball mill to obtain a ground product. The same operation as in Experiment Example 1 was conducted except that 0.3 part of citric acid and 0.7 part of potassium carbonate were added per 100 parts of the calcium aluminate clinker contained in the ground product, to obtain a quick hardening material.

**[Table 3]**

| Experiment No. | Multicolor pattern | Useful life (min) | Compressive strength (N/mm²) | | Remark |
|---|---|---|---|---|---|
| | | | 3 hours | 7 days | |
| 1-6 | ○ | 25 | 10.4 | 68.9 | Example of the present invention |
| 3-1 | ○ | 33 | 9.7 | 69.9 | Example of the present invention |
| 3-2 | ○ | 28 | 9.2 | 67.5 | Example of the present invention |

It is found from Table 3 that the effects of the present invention are obtained in each of the method of adding the fatty acid to the calcium aluminate clinker, followed by mixing and grinding (experiment No. 1-6), the method of adding the fatty acid to the calcium aluminate clinker ground product, followed by mixing and grinding (experiment No. 3-1) and the method of mixing the calcium aluminate clinker and gypsum and then adding the fatty acid, followed by mixing and grinding (experiment No. 3-2).

### Experiment Example 4

To 100 parts of the calcium aluminate clinker, 0.5 part of stearic acid as the fatty acid was added, followed by mixing and grinding to a Blaine value of 6,000 cm²/g by a roller mill (manufactured by Kotobuki Engineering & Manufacturing Co., Ltd., model: RM22G, parallel type) or a rod mill (manufactured by CMT Co., Ltd., model: TI-300) to produce a calcium aluminate clinker ground product. The same operation as in 16 Experiment Example 1 was conducted except that to 100 parts of the obtained calcium aluminate clinker ground product, 100 parts of anhydrous gypsum, 0.3 part of citric acid and 0.7 part of potassium carbonate were added to obtain a quick hardening material.

**[Table 4]**

| Experiment No. | Grinding machine | Multicolor pattern | Useful life (min) | Compressive strength (N/mm²) | | Remark |
|---|---|---|---|---|---|---|
| | | | | 3 hours | 7 days | |
| 1-6 | Ball mill | ○ | 25 | 10.4 | 68.9 | Example of the present invention |
| 4-1 | Roller mill | ○ | 27 | 9.1 | 71 | Example of the present invention |
| 4-2 | Rod mill | ○ | 24 | 9.3 | 68.8 | Example of the present invention |

It is found from Table 4 that the effects of the present invention were obtained by any grinding machine.

### INDUSTRIAL APPLICABILITY

According to the quick hardening material and the quick hardening cement composition of the present invention, it is possible to provide a cement composition excellent in development of early strength without impairing development of long-term strength and appearance, which can be suitably used in civil engineering and building fields.

## Claims

1. A cement quick hardening material which comprises a calcium aluminate clinker ground product obtained by grinding 100 parts by mass of a calcium aluminate clinker in the presence of from 0.2 to 3.0 parts by mass of a fatty acid represented by the formula (RCOO)ₙX (wherein R is a saturated or unsaturated hydrocarbon, n is 1 or 2, and X is hydrogen, an alkali metal or an alkaline earth metal), gypsum, a retarder and an alkali metal carbonate.

2. The cement quick hardening material according to Claim 1, wherein the fatty acid is palmitic acid or stearic acid.

3. The cement quick hardening material according to Claim 1 or 2, wherein the retarder is at least one member selected from the group consisting of citric acid, gluconic acid, tartaric acid, malic acid and salts thereof.

4. The cement quick hardening material according to any one of Claims 1 to 3, wherein the alkali metal carbonate is lithium carbonate, sodium carbonate, potassium carbonate, sodium bicarbonate or potassium bicarbonate.

5. The cement quick hardening material according to any one of Claims 1 to 4, which contains the gypsum in an amount of from 20 to 150 parts per 100 parts of the calcium aluminate clinker ground product, and contains the retarder in an amount of from 0.1 to 25 parts and the alkali metal carbonate in an amount of from 2 to 55 parts per 100 parts of a mixture of the calcium aluminate clinker ground product and the gypsum.

6. The cement quick hardening material according to any one of Claims 1 to 5, wherein the calcium aluminate clinker ground product has a Blaine specific surface area of from 3,500 to 8,500 cm²/g.

7. A method for producing the quick hardening material as defined in any one of Claims 1 to 6, which comprises adding the fatty acid to the calcium aluminate clinker, followed by mixing and grinding, and adding the gypsum, the retarder and the alkali metal carbonate sequentially or all at once to the obtained calcium aluminate clinker ground product.

8. A method for producing the quick hardening material as defined in any one of Claims 1 to 6, which comprises adding the fatty acid to a ground product of the calcium aluminate clinker, followed by mixing and grinding, and adding the gypsum, the retarder and the alkali metal carbonate sequentially or all at once to the obtained calcium aluminate clinker ground product.

9. A method for producing the quick hardening material as defined in any one of Claims 1 to 6, which comprises adding the fatty acid and the gypsum to the calcium aluminate clinker, followed by grinding, and adding the retarder and the alkali metal carbonate sequentially or all at once to the obtained calcium aluminate clinker ground product.

10. A quick hardening cement composition which comprises cement and the quick hardening material as defined in any one of Claims 1 to 6.

11. The quick hardening cement composition according to Claim 10, wherein the content of the quick hardening material is from 5 to 35 parts per 100 parts of the total amount of the cement and the quick hardening material.

12. A method for improving early strength of cement concrete, which uses the quick hardening cement composition as defined in Claim 10 or 11.

## Patentansprüche

1. Schnell härtendes Zementmaterial, das ein gemahlenes Calciumaluminat-Klinkerprodukt umfasst, das durch Mahlen von 100 Massenteilen eines Calciumaluminat-Klinkers in Anwesenheit von 0,2 bis 3,0 Massenteilen einer Fettsäure der Formel (RCOO)ₙX (wobei R für einen gesättigten oder ungesättigten Kohlenwasserstoff steht, n für 1 oder 2 steht und X für Wasserstoff, ein Alkalimetall oder ein Erdalkalimetall steht), Gips, einem Verzögerer und einem Alkalimetallcarbonat erhalten wird.

2. Schnell härtendes Zementmaterial nach Anspruch 1, wobei die Fettsäure Palmitinsäure oder Stearinsäure ist.

3. Schnell härtendes Zementmaterial nach Anspruch 1 oder 2, wobei der Verzögerer wenigstens ein Element ist, ausgewählt aus der Gruppe, bestehend aus Zitronensäure, Gluconsäure, Weinsäure, Apfelsäure und Salzen derselben.

4. Schnell härtendes Zementmaterial nach einem der Ansprüche 1 bis 3, wobei das Alkalimetallcarbonat Lithiumcarbonat, Natriumcarbonat, Kaliumcarbonat Natriumbicarbonat oder Kaliumbicarbonat ist.

5. Schnell härtende Zementzusammensetzung nach einem der Ansprüche 1 bis 4, welche den Gips in einer Menge von 20 bis 150 Teilen pro 100 Teile des gemahlenen Calciumaluminat-Klinkerprodukts enthält und den Verzögerer in einer Menge von 0,1 bis 25 Teilen und das Alkalimetallcarbonat in einer Menge von 2 bis 55 Teilen pro 100 Teile einer Mischung aus dem gemahlenen Calciumaluminat-Klinkerprodukt und dem Gips.

6. Schnell härtende Zementzusammensetzung nach einem der Ansprüche 1 bis 5, wobei das gemahlenen Calciumaluminat-Klinkerprodukt eine spezifische Oberfläche nach Blaine von 3.500 bis 8.000 cm²/g aufweist.

7. Verfahren zur Herstellung eines schnell härtenden Materials, wie in einem der Ansprüche 1 bis 6 definiert, das das Zugeben der Fettsäure zu dem Calciumaluminat-Klinker umfasst, gefolgt von Mischen und Mahlen und, nacheinander oder auf einmal, Zugeben des Gipses, des Verzögerers und des Alkalimetallcarbonats zu dem erhaltenen, gemahlenen Calciumaluminat-Klinkerprodukt.

8. Verfahren zur Herstellung eines schnell härtenden Materials, wie in einem der Ansprüche 1 bis 6 definiert, das das Zugeben der Fettsäure zu dem gemahlenen Calciumaluminium-Klinkerprodukt umfasst, gefolgt von Mischen und Mahlen und, nacheinander oder auf einmal, Zugeben des Gipses, des Verzögerers und des Alkalimetallcarbonats zu dem erhaltenen, gemahlenen Calciumaluminat-Klinkerprodukt.

9. Verfahren zur Herstellung eines schnell härtenden Materials, wie in einem der Ansprüche 1 bis 6 definiert, das das Zugeben der Fettsäure und des Gipses zu dem Calciumaluminat-Klinker umfasst, gefolgt von Mahlen und, nacheinander oder auf einmal, Zugeben des Verzögerers und des Alkalimetallcarbonats zu dem erhaltenen, gemahlenen Calciumaluminat-Klinkerprodukt.

10. Schnell härtende Zementzusammensetzung, welche Zement und das schnell härtende Material, wie in einem der Ansprüche 1 bis 6 definiert, umfasst.

11. Schnell härtende Zementzusammensetzung nach Anspruch 10, wobei der Gehalt des schnell härtenden Materials von 5 bis 35 Teile pro 100 Teile der Gesamtmenge des Zements und des schnell härtenden Materials beträgt.

12. Verfahren zum Verbessern der Frühfestigkeit von Zementbeton, bei dem die schnell härtende Zementzusammensetzung, wie in Anspruch 10 oder 11 definiert, verwendet wird.

## Revendications

1. Matériau de prise rapide de ciment qui comprend un produit broyé de scories d'aluminate de calcium obtenu par broyage de 100 parties en masse de scories d'aluminate de calcium en présence de 0,2 à 3,0 parties en masse d'un acide gras représenté par la formule (RCOO)ₙX (dans laquelle R est un hydrocarbure saturé ou insaturé, n est 1 ou 2, et X est un hydrogène, un métal alcalin ou un métal alcalino-terreux), de gypse, d'un retardateur et d'un carbonate de métal alcalin.

2. Matériau de prise rapide de ciment selon la revendication 1, dans lequel l'acide gras est l'acide palmitique ou l'acide stéarique.

3. Matériau de prise rapide de ciment selon la revendication 1 ou 2, dans lequel le retardateur est au moins un membre choisi dans le groupe constitué par l'acide citrique, l'acide gluconique, l'acide tartrique, l'acide malique et leurs sels.

4. Matériau de prise rapide de ciment selon l'une quelconque des revendications 1 à 3, dans lequel le carbonate de métal alcalin est le carbonate de lithium, le carbonate de sodium, le carbonate de potassium, le bicarbonate de sodium ou le bicarbonate de potassium.

5. Matériau de prise rapide de ciment selon l'une quelconque des revendications 1 à 4, qui contient le gypse en une quantité de 20 à 150 parties pour 100 parties du produit broyé de scories d'aluminate de calcium, et contient le retardateur en une quantité de 0,1 à 25 parties et le carbonate de métal alcalin en une quantité de 2 à 55 parties pour 100 parties d'un mélange du produit broyé de scories d'aluminate de calcium et du gypse.

6. Matériau de prise rapide de ciment selon l'une quelconque des revendications 1 à 5, dans lequel le produit broyé de scories d'aluminate de calcium a une surface spécifique Blaine de 3 500 à 8 500 cm²/g.

7. Procédé pour produire le matériau de prise rapide de ciment tel que défini dans l'une quelconque des revendications 1 à 6, qui comprend l'addition de l'acide gras aux scories d'aluminate de calcium, suivie d'un mélange et d'un broyage, et de l'addition du gypse, du retardateur et du carbonate de métal alcalin en séquence ou tous à la fois au produit broyé de scories d'aluminate de calcium obtenu.

8. Procédé pour produire le matériau de prise rapide de ciment tel que défini dans l'une quelconque des revendications 1 à 6, qui comprend l'addition de l'acide gras à un produit broyé des scories d'aluminate de calcium, suivie d'un mélange et d'un broyage, et de l'addition du gypse, du retardateur et du carbonate de métal alcalin en séquence ou tous à la fois au produit broyé de scories d'aluminate de calcium obtenu.

9. Procédé pour produire le matériau de prise rapide de ciment tel que défini dans l'une quelconque des revendications 1 à 6, qui comprend l'addition de l'acide gras et du gypse aux scories d'aluminate de calcium, suivie d'un mélange et d'un broyage, et de l'addition du retardateur et du carbonate de métal alcalin en séquence ou tous à la fois au produit broyé de scories d'aluminate de calcium obtenu.

10. Composition de ciment à prise rapide qui comprend du ciment et le matériau de prise rapide tel que défini dans l'une quelconque des revendications 1 à 6.

11. Composition de ciment à prise rapide selon la revendication 10, dans laquelle la teneur en le matériau de prise rapide est de 5 à 35 parties pour 100 parties de la quantité totale du ciment et du matériau de prise rapide.

12. Procédé pour améliorer une prise précoce du béton de ciment, qui utilise la composition de ciment à prise rapide telle que définie dans la revendication 10 ou 11.
